**Europäisches Patentamt**

**European Patent Office**

**Office européen des brevets**

(19)

(11) Veröffentlichungsnummer : **0 120 988 B2**

(12) **NEUE EUROPÄISCHE PATENTSCHRIFT**

(45) Veröffentlichungstag der neuen Patentschrift :
06.05.92 Patentblatt 92/19

(51) Int. Cl.⁵ : **B01D 29/62**

(21) Anmeldenummer : 83108036.1

(22) Anmeldetag : 13.08.83

(54) **Rückspülbares Filtergerät.**

(30) Priorität : 05.03.83 DE 3307918

(43) Veröffentlichungstag der Anmeldung :
10.10.84 Patentblatt 84/41

(45) Bekanntmachung des Hinweises auf die
Patenterteilung :
13.05.87 Patentblatt 87/20

(45) Bekanntmachung des Hinweises auf die
Entscheidung über den Einspruch :
06.05.92 Patentblatt 92/19

(84) Benannte Vertragsstaaten :
AT BE CH DE FR GB IT LI LU NL SE

(56) Entgegenhaltungen :
EP-B- 0 018 527
DE-C- 2 852 611
DE-U- 1 943 425
GB-A- 413 677
GB-A- 1 078 958
US-A- 2 125 532
US-A- 4 156 651

(73) Patentinhaber : **Joh.A. Benckiser
Wassertechnik GmbH
Postfach 1140 Industriestrasse
W-6905 Schriesheim (DE)**

(72) Erfinder : **Bellemann, Rudolf, Dipl.-Ing.
Birkenweg 18
W-6837 St. Leon-Rot (DE)**
Erfinder : **Diehlmann, Rolf, Ing. grad.
Königsberger Strasse 28
W-6840 Lampertheim (DE)**
Erfinder : **Dobrocsi, Bela
K-Adenauer-Strasse 55
W-6940 Weinheim (DE)**
Erfinder : **Wacker, Karl Friedrich
Erfurterstrasse 11
W-6830 Schwetzingen (DE)**

(74) Vertreter : **Wolf, Eckhard, Dr.-Ing.
Eugensplatz 5 Postfach 13 10 01
W-7000 Stuttgart 1 (DE)**

**EP 0 120 988 B2**

EP 0 120 988 B2

## Beschreibung

Die Erfindung betrifft ein Filtergerät mit rückspülbarem Filterelement für unter Überdruck stehende Flüssigkeiten, insbesondere für den Anschluss an Wasserleitungen, der im Oberbegriff des Anspruchs 1 angegebenen Gattung.

Filtergeräte dieser Art verhindern, dass von der Flüssigkeit mitgeführte Verunreinigungen, wie Sand, Hanf, Eisenspäne, Rostteilchen u. dgl. zu den nachgeordneten Armaturen, Verbrauchern und Geräten gelangen und dort zu Störungen und Beschädigungen führen können. Die Verunreinigungen setzen sich auf der Rohflüssigkeitsseite des Filterelements ab. Mit zunehmender Verschmutzung des Filterelements erhöht sich der Druckabfall im Gerät. Deshalb muss das Filterelement von Zeit zu Zeit durch Umkehrung der Strömung gereinigt werden. Aufgrund der Strömungsumkehr wird der an der rohflüssigkeitsseitigen Oberfläche anhaftende Schmutz abgelöst und über einen während des Rückspülvorgangs offenen Rückspülkanal ausgeschwemmt. Zur Erzielung eines guten Reinigungseffekts ist eine möglichst hohe Strömungsgeschwindigkeit der Rückspülflüssigkeit durch das Filterelement erforderlich. Andererseits sollte der für den Rückspülvorgang notwendige Flüssigkeitsverbrauch klein gehalten werden.

Zu diesem Zweck ist es bei Filtergeräten der eingangs angegebenen Art bekannt (GB-A-413677), ein austrittsseitig zum Rückspülkanal, führendes Kanalstück zu verwenden, das eine kleine Eintrittsöffnung aufweist, mit der durch Verschieben des Kanalstücks die gesamte Oberfläche des Filterelements überstrichen werden kann. Die Eintrittsöffnung des Kanalstücks ist als radial gegen die Innenfläche des Filterelements weisende schlitzförmige Umfangsöffnung ausgebildet, die an einem mit den Begrenzungskanten der Eintrittsöffnung gegen das Filterelement dichtend anliegenden und beim Verschieben des Kanalstücks auf diesem axial gleitenden Abstreifer angeordnet ist. Das Filterelement besteht dort aus einem Hohlzylinder aus Metall, der eine grosse Anzahl kreisförmiger Bohrungen aufweist, die nach aussen hin erweitert sind und einen kreisförmigen Sitz für Scheiben aus einem geeigneten Filtermaterial bilden. Die vom Kanalstück überstrichene Innenfläche des Filterelements weist somit im Bereich der Bohrungen keine glatte Oberfläche auf. Um dennoch eine ausreichende Abdichtung zwischen Kanalstück und Filterelement zu gewährleisten, muss zwischen den Bohrungen ausreichend Strukturmaterial vorhanden sein, das jedoch die Leistungsfähigkeit des Filterelements verschlechtert. Hinzu kommt, dass dort die Rückspülkammer durch einen Boden und einen Betätigungszylinder für das Kanalstück von den flüssigkeitsführenden Kammern des Filtergeräts getrennt ist, so dass Grobschmutzteilchen, die während des Filterbetriebs im Bereich der Rohflüssigkeitskammer anfallen oder durch den Abstreifer vom Filterelement abgestreift werden, im Rohflussigkeitsbereich bleiben und nicht nach aussen abgeführt werden können.

Der Erfindung liegt daher die Aufgabe zugrunde, ein rückspülbares Filtergerät der eingangs angegebenen Art zu schaffen, das bei gegebenen Abmessungen des Filterelements eine grosse effektive Durchtrittsfläche und dennoch eine für den kontinuierlichen Bewegungsablauf beim Rückspülvorgang notwendige glatte Anlagefläche für das Kanalstück aufweist und bei dem zusätzliche Vorkehrungen für die Rückspülung von Grobschmutzteilchen getroffen sind.

Zur Lösung dieser Aufgabe wird die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Mit den erfindungsgemässen Vorkehrungen wird erreicht, dass das axial verschiebbare Kanalstück mit seinem unter elastischer Vorspannung stehenden Abstreifer dicht gegen den Filterstrumpf anliegt und beim Rückspülvorgang kontinuierlich über die glatte Innenfläche des Filterstrumpfs verschoben werden kann. Die Rohflüssigkeitskammer ist erfindungsgemäss in der Ausgangslage und/oder Endlage des Kanalstücks über mindestens eine beim Verschieben des Kanalstücks selbsttätig verschliessbare Durchtrittsöffnung mit der darunter befindlichen Rückspülkammer verbunden. Dadurch wird gewährleistet, dass bereits während des Filtrierbetriebs Grobschmutz von der Rohwasserkammer in die Rückspülkammer gelangen kann und dass dennoch während des Rückspülvorgangs die für das Rückspülen erforderliche Druckdifferenz zwischen den wasserführenden Kammern des Filtergeräts und der Rohwasserkammer aufgebaut wird. Der während des Rückspülvorgangs durch den Abstreifer abgeschabte Grobschmutz kann in den Endstellungen des Kanalstücks durch die Durchtrittsöffnung ebenfalls zur Rückspülkammer gelangen und mit dem Rückspülwasser ausgespült werden.

Weiter ist gemäss der Erfindung der Abstreifer aus mehreren in Umfangsrichtung in kleinen Abstand voneinander am Kanalstück angeordneten Abstreifelementen zusammengesetzt, deren voneinander getrennte, radial nach aussen weisende Eintrittsöffnungen sich zu einer weitgehend geschlossenen Umfangsöffnung ergänzen, während das Kanalstück ein an seiner Unterseite mit der Austrittsöffnung und an seiner Mantelfläche mit Mantelöffnungen versehenes Zentralrohr aufweist und die Abstreifelemente mit schräg nach unten weisenden Rohransätzen in die Mantelöffnungen des Zentralrohrs dichtend eingesteckt, vorzugsweise eingerastet sind. Damit wird erreicht, dass die Abstreifelemente in radialer Richtung ausweichen können, so dass Ferti-

2

gungstoleranzen sowie Unebeneiten aufgrund von Ablagerungen auf dem Filterstrumpf ausgeglichen werden können.

Nach einer weiteren vorteilhaften Ausgestaltung der Erfindung weist der Stützkörper eine schraubenförmig verlaufende Stützrippe für den Filterstrumpf auf, auf der der Abstreifer über die gesamte axiale Verschiebestrecke mit gleichbleibendem Druck und damit gleichbleibender Gleitreibung anliegt, wodurch ein kontinuierlicher Bewegungsablauf gewährleistet ist.

Vorteilhafterweise ist das Kanalstück als Kolben ausgebildet, dessen wirksame Kolbenfläche mit Hilfe einer innerhalb des Filtergeräts angeordneten, manuell oder automatisch betätigbaren hydraulischen Steuerungseinrichtung wahlweise mit einem nach der einen oder anderen axialen Verschieberichtung des Kolbens weisenden Differenzdruck beaufschlagbar und das Kanalstück dadurch von einer Ausgangslage in eine Endlage oder umgekehrt verschiebbar ist.

Vorteilhafterweise trägt das Kanalstück an seinem in die Rückspülkammer eintauchenden Ende einen Schliesskörper, der gegen einen Dichtsitz im Bereich des Rückspülkanals andrückbar ist. Das Kanalstück kann dabei verschiebefest und drehbar und der Schliesskörper drehfest und verschiebbar auf einer an ihrem einen Ende von Hand oder automatisch verschieb- und drehbaren Betätigungsstange angeordnet sein, während der Schliesskörper ausserdem mit einem Gewinde in ein im Bereich des Dichtsitzes am Filtergerät starr angeordnetes Gegengewinde eingreift und das Kanalstück innerhalb des Filterelements drehfest axial geführt ist. Das Öffnen und Schliessen des Schliesskörpers erfolgt also durch Drehen der Betätigungsstange und ist somit von der Verschiebebewegung der Betätigungsstange während des Rückspülvorgangs unabhängig. Im Verlauf der Verschiebebewegung wird das Filterelement an den augenblicklich vom Abstreifer überstrichenen Stellen von aussen nach innen rückgespült, während zugleich gröbere Schmutzteilchen durch den Abstreifer von der Filteroberfläche abgeschabt und auf anderem Wege zur Auslassöffnung geführt werden. Um eine gleichförmige Verschiebebewegung zu gewährleisten, ist gemäss der Erfindung am Kanalstück oder an der Betätigungsstange ein in axialer Bewegungsrichtung wirkendes Dämpfungsglied angeordnet.

Um darüber hinaus die internen Reibungsverluste so klein wie möglich zu halten, ist auf eine exakte koaxiale Ausrichtung der gegeneinander bewegten Teile zu achten. Dies wird erfindungsgemäss dadurch erreicht, dass sowohl das Filterelement als auch eine das Filterelement und das Kanalstück übergreifende Filtertasse an zueinander zentrischen Durchbrüchen eines den Rohflüssigkeitseinlass und den Reinflüssigkeitsauslass enthaltenden gemeinsamen Kopfstücks lösbar befestigt sind.

Im Folgenden wird die Erfindung anhand der in der Zeichnung schematisch dargestellten Ausführungsbeispiel näher erläutert. Es zeigen:

Fig. 1 bis 4 vier verschiedene Ausführungsbeispiele eines Filtergeräts mit Rückspülvorrichtung in senkrecht geschnittener Darstellung;

Fig. 5 eine Draufsicht auf die vom Kopfstück abgenommene Filtertasse der Filtergeräte nach den Fig. 1 bis 3;

Fig. 6 ein weiteres Ausführungsbeispiel eines Filtergeräts in senkrecht geschnittener Darstellung;

Fig. 7 einen Schnitt durch das Steuerventil des Filtergeräts nach Fig. 6;

Fig. 8 ein weiteres bevorzugtes Ausführungsbeispiel eines Filtergeräts in senkrecht geschnittener Darstellung;

Fig. 9 einen vergrösserten Ausschnitt aus Fig. 8 mit abgewandeltem Verschlussmechanismus im Bereich der Austrittsöffnung des Kanalstücks.

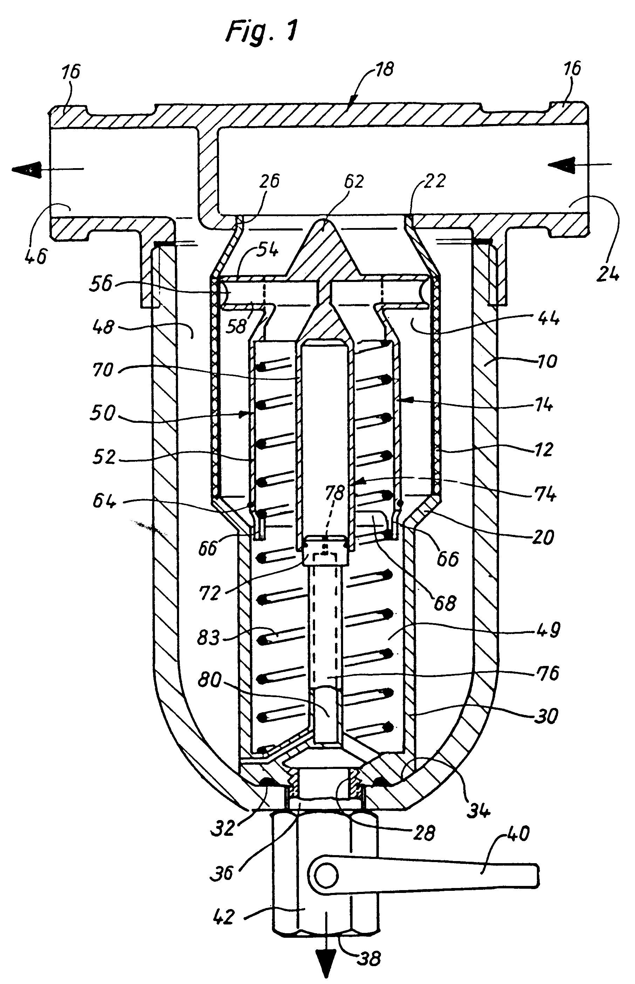

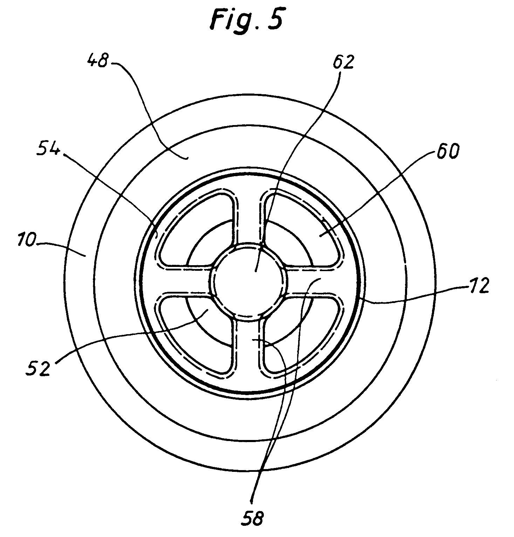

Die Figuren 1 bis 6 und die zugehörigen Beschreibungsteile entsprechen nicht oder nur teilweise den geltenden Ansprüchen. Sie sollen dazu dienen, die Entwicklung der Erfindung darzustellen.

Die in der Zeichnung dargestellten Filtergeräte sind vor allem für den Anschluss an Wasserleitungen, insbesondere für die Hauswasserversorgung bestimmt und haben die Aufgabe, die Leitungen und die daran angeschlossenen Armaturen und Geräte vor Verunreinigungen zu schützen. Sie bestehen im wesentlichen aus einer Filtertasse 10, einem in die Filtertasse 10 eingesetzten Filterelement 12, einer Rückspülvorrichtung 14 und einem mit Rohranschlüssen 16 versehenen Kopfteil 18, an dem die Filtertasse 10 zusammen mit dem Filterelement 12 befestigbar ist.

Bei den in Fig. 1 bis 5 gezeigten Ausführungsbeispielen befindet sich das Filterelement 12 an einem rohrförmigen Trag- oder Stützkörper 20 aus Kunststoff, dessen oberes Ende 22 in eine zum Rohwassereinlass 24 führende Öffnung 26 des Kopfteils 18 eingesteckt ist und dessen unteres Ende als mit einer Bodenöffnung 28 versehener Hohlzylinder 30 ausgebildet ist, der über einen Dichtungsring 32 am Tassenboden 34 abgestützt ist. Die Bodenöffnung 28 ist durch eine Muffe 36 mit einem am Tassenboden 34 angeordneten, zu einem Rückspülkanal führenden Rohranschluss 38 verbunden, der ein mit einem Handhebel 40 betätigbares Absperrorgan 42 enthält. Das Absperrorgan 42 kann beispielsweise als Ventil, Hahn oder Schieber ausgebildet sein. Statt von Hand kann das etwa als Magnetventil ausgebildete Absperrorgan auch automatisch, z.B. mit einer Zeit- oder Differenzdrucksteuerung angesteuert werden.

Durch das Filterelement 12 wird der Innenraum der Filtertasse 10 in zwei Kammern unterteilt, eine mit dem Rohwassereinlass 24 verbundene Rohwasserkammer 44 im Inneren des Filterelements 12 und eine mit dem Reinwasserauslass 46 verbundene Reinwasserkammer 48 auf der Aussenseite des Filterelements 12.

Während des Filtrierbetriebs tritt das ankommende Wasser durch den Rohwassereinlass 24 in die Rohwasserkammer 44 ein, durchströmt das Filterelement 12 von innen nach aussen und fliesst gereinigt durch den Reinwasserauslass 46 ab. Die im Rohwasser befindlichen Schwebeteilchen werden an der inneren Filterfläche zurückgehalten. Gröbere Teilchen sinken nach unten in die durch den Hohlzylinder 30 begrenzte Rückspülkammer 49. Mit zunehmender Verschmutzung des Filterelements 12 erhöht sich der Druckabfall am Gerät. Deshalb muss das Filterelement 12 von Zeit zu Zeit durch Rückspülen gereinigt werden. Hierfür dient die im Inneren des Filterelements 12 angeordnete Rückspülvorrichtung 14.

Die Rückspülvorrichtung 14 enthält ein relativ zum Filterelement 12 axial verschiebbares Kanalstück 50, das ein in den Hohlzylinder 30 einführbares und zu diesem hin offenes Rohrstück 52 und mindestens einen radial über den Rohrmantel überstehenden und zum Filterelement 12 hin über seinen ganzen Umfang offenen Ringkanal 54 aufweist. Durch axiales Verschieben des Kanalstücks 50 kann mit der Öffnung 56 des Ringkanals 54 die gesamte rohwasserseitige Oberfläche des Filterelements 12 überstrichen werden.

Der Ringkanal 54 und das Rohr 52 sind über mehrere im Winkelabstand voneinander angeordnete Radialkanäle 58 verbunden, deren freie Zwischenräume Durchtrittsöffnungen 60 für das vom Rohwassereinlass 24 zum Filterelement 12 fliessende Rohwasser bilden. Ein mit seiner Spitze zum Rohwassereinlass 24 weisender kegelförmiger Strömungsleitkörper 62 sorgt für eine gleichmässige Strömungsverteilung über den Filterquerschnitt.

Bei geschlossenem Absperrorgan 42 befindet sich das Kanalstück 50 in der in den Fig. 1 bis 3 gezeigten oberen Ausgangslage. In dieser Lage ist das untere, einen Dichtungsring 64 tragende Ende des Rohrs 52 bis auf die nach unten überstehenden Führungsnasen 66 ganz aus dem Hohlzylinder 30 herausgezogen und gibt einen von der Rohwasserkammer 44 zur Rückspülkammer 49 führenden Ringspalt 68 frei. Durch diesen können bereits während des Filterbetriebs grobe Schmutzteilchen in die Rückspülkammer 49 gelangen.

Ausgelöst wird der Rückspülvorgang durch Öffnen des Absperrorgans 42. Dabei strömt zunächst Rohwasser von oben durch den Ringspalt 68 in die Rückspülkammer 49 und spült die dort angesammelten Schmutzteilchen durch den Rückspülkanal aus.

Gleichzeitig strömt Reinwasser von der Reinwasserkammer 48 durch das Filterelement 12 zur Umfangsöffnung 56 des Ringkanals 54 und spült das Filterelement an der betreffenden Stelle frei. Das Rückspülwasser gelangt über das Kanalstück 50 zur Rückspülkammer 49 und fliesst über den Rückspülkanalanschluss 38 gegen Atmosphärendruck ab. Das nach oben geschlossene Kanalstück 50 bildet einen Kolben, auf dessen wirksame Kolbenfläche der Differenzdruck zwischen dem Rohwassereinlass 24 und der Rückspülkammer 49 bei geöffnetem Absperrorgan 42 eine nach unten gerichtete Kraft ausübt. Dadurch wird das Kanalstück 50 zunächst langsam nach unten verschoben, bis der Dichtungsring 64 die Rückspülkammer 49 gegen die Rohwasserkammer 44 abschliesst. Da die Rückspülkammer 49 dann nur noch über den Rückspülkanal gegen Atmosphärendruck geöffnet ist und von oben durch den Ringspalt 68 kein Wasser mehr nachfliesst, erhöht sich der an der wirksamen Kolbenfläche angreifende Differenzdruck. Dadurch wird das Kanalstück 50 nun mit höherer Geschwindigkeit nach unten bis zu seiner unteren Endlage verschoben. Dabei wird die gesamte rohwasserseitige Oberfläche des Filterelements 12 von der Ringöffnung 56 des Ringkanals 54 überstrichen und durch das Rückspülwasser gereinigt.

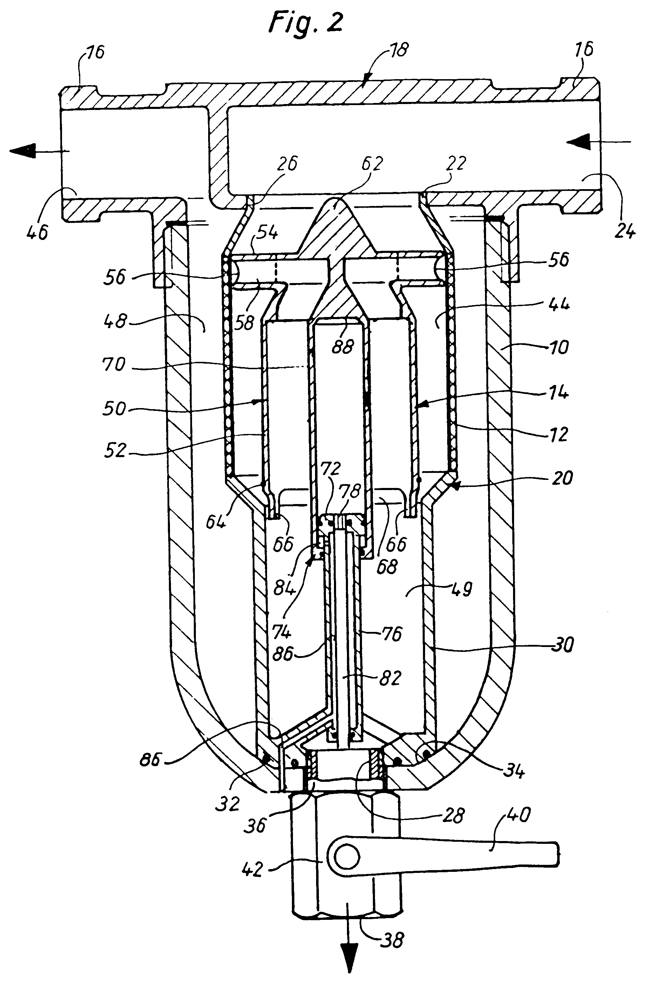

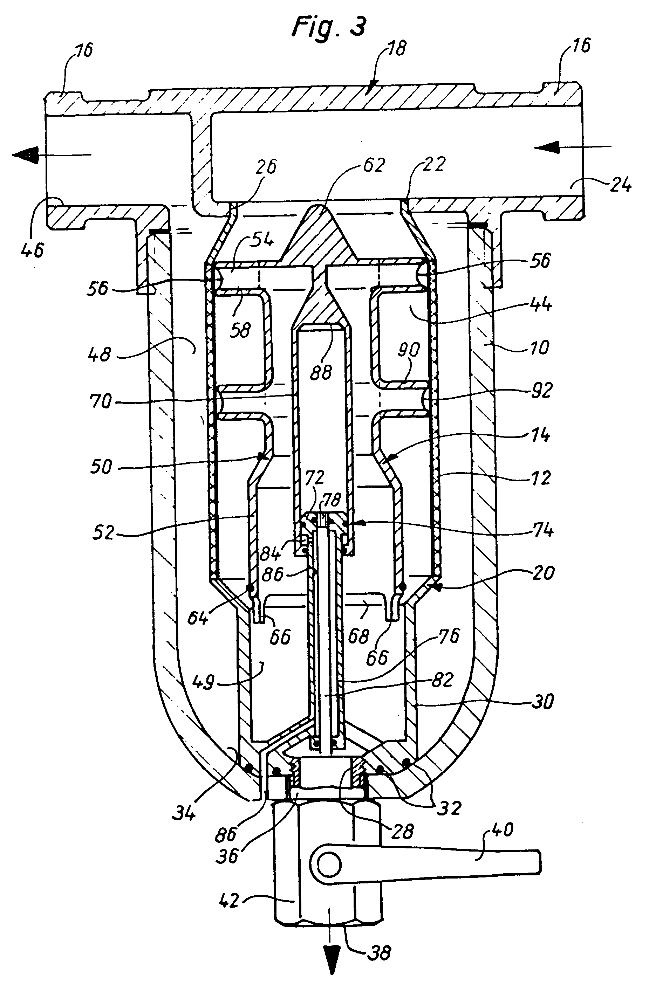

Um eine gleichförmige und ausreichend langsame Verschiebebewegung des Kanalstücks 50 zu gewährleisten, ist zusätzlich ein aus einem Drosselzylinder 70 und einem Drosselkolben 72 bestehendes Dämpfungsglied 74 vorgesehen. Der Drosselzylinder 70 ist axialsymmetrisch mit nach unten weisender Öffnung am Kanalstück 50 angeformt, während der Drosselkolben 72 am Ende einer innerhalb des Hohlzylinders 30 zentral nach oben weisenden Kolbenstange 76 angeordnet ist. Das Innere des Drosselzylinders 70 steht über eine Drosselöffnung 78 im Drosselkolben 72 und eine Bohrung 80 bzw. Leitung 82 in der Kolbenstange 76 mit der Reinwasserkammer 48 (Fig. 1) bzw. der Rückspülkammer 49 (Fig. 2 und 3) in Verbindung.

Während des Rückspülvorgangs kann nach wie vor Wasser von der Rohwasserseite durch den freien Teil des Filterelements 12 zur Reinwasserseite gelangen und damit der Filtrierbetrieb aufrechterhalten werden.

Wird am Ende eines Rückspülvorgangs das Absperrorgan 42 geschlossen, gleicht sich der Druck in der Rückspülkammer 49 wieder dem Betriebsdruck an, so dass das Kanalstück 50 in der nachfolgend beschriebenen Weise in seine Ausgangslage zurückgelangen kann.

Im Falle des in Fig. 1 gezeigten Ausführungsbeispiels erfolgt die Rückstellung des Kanalstücks 50 mit Hilfe einer als Schraubenfeder ausgebildeten Rückstellfeder 83, die mit ihrem einen Ende an einem Widerlager des Kanalstücks 50 und mit ihrem anderen Ende am Boden des Hohlzylinders 30 abgestützt ist. Die für das Rückstellen zur Verfügung stehende Federkraft muss beim vorhergehenden Rückspülvorgang durch die auf die wirksame Kolbenfläche des Kanalstücks 50 ausgeübte Druckkraft überwunden werden, so dass eine zuverlässige Funktion nur oberhalb eines bestimmten Betriebsdrucks gewährleistet ist.

Bei den in Fig. 2 und 3 gezeigten Ausführungsbeispielen ist die genannte Funktion dagegen unabhängig vom jeweils herrschenden Betriebsdruck. Für die Rückstellung des Kanalstücks 50 wird hier das unter dem Betriebsdruck stehende Wasser aus der Rückspülkammer 49 des Filtergeräts verwendet, das über die Leitung 82 und die Drosselöffnung 78 in das Innere des Drosselzylinders 70 gelangt. Hierzu ist ausserdem der durch die Unterseite des Drosselkolbens 72 und die Kolbenstange 76 begrenzte Ringraum 84 des Drosselzylinders 70 über die Bohrung 86 ständig mit Atmosphärendruck beaufschlagt.

Während des reinen Filtrierbetriebs bei geschlossenem Rückspülkanal wird das Kanalstück 50 durch den sich zwischen dem Betriebsdruck in der Rückspülkammer 49 und dem Atmosphärendruck im Ringraum 84 einstellenden Differenzdruck in der oberen Ausgangslage gehalten. Sobald der Rückspülvorgang durch Öffnen des Absperrorgans 42 ausgelöst wird, wird das Wasser aus dem Drosselzylinder 70 unter der Einwirkung des sich zwischen dem Rohwassereinlass 24 und der Rückspülkammer 49 aufbauenden Differenzdrucks durch die Drosselöffnung 78 und die zum Rückspülkanal hin offene Leitung 82 verdrängt, so dass sich das Kanalstück langsam und gleichförmig nach unten bewegt. Die Geschwindigkeit des Bewegungsablaufs wird durch den Querschnitt der Drosselöffnung 78 bestimmt. Beim anschliessenden Verschliessen des Absperrorgans 42 gleicht sich der Druck im Inneren des Drosselzylindrs 70 wieder dem Betriebsdruck an, während im Ringraum 84 nach wie vor Atmosphärendruck herrscht. Dadurch wird das Kanalstück 50 allmählich wieder in seine obere Ausgangslage verschoben.

Bei dem in Fig. 3 gezeigten Ausführungsbeispiel ist im Abstand unter dem oberen Ringkanal 54 noch ein weiterer Ringkanal 90 mit Umfangsöffnung 92 vorgesehen. Dadurch steht bei gleicher Baugrösse des Filtergeräts trotz kleinerem Hubweg des Kanalstücks 50 eine grössere Filterfläche zur Verfügung.

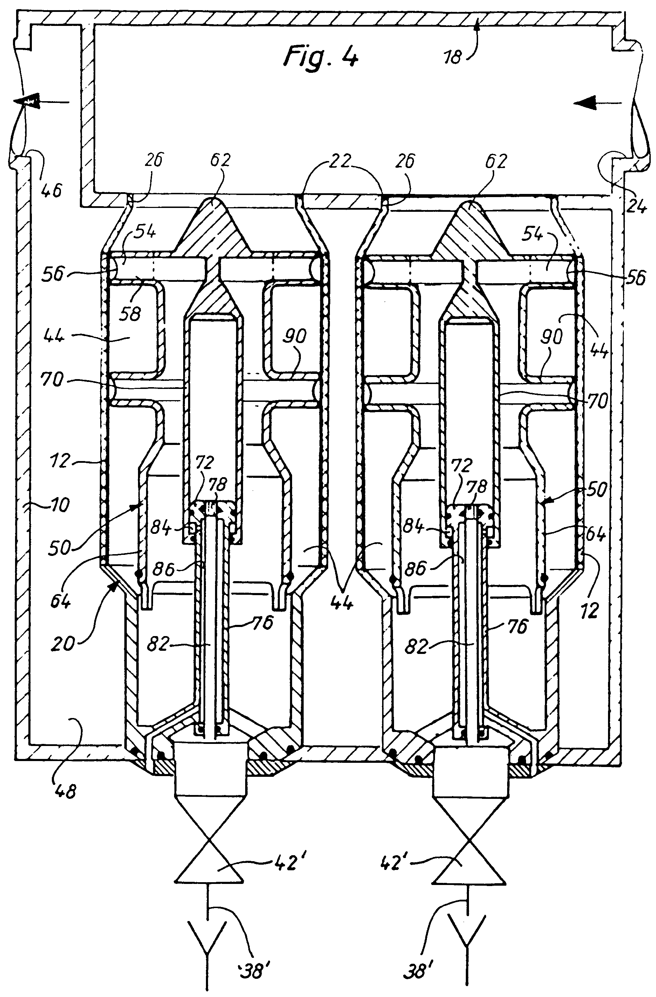

Bei dem Ausführungsbeispiel nach Fig. 4 sind innerhalb der Filtertasse 10 mehrere nebeneinander angeordnete Filterelemente 12 mit Kanalstück 50 angeordnet, die jeweils entsprechend dem in Fig. 3 gezeigten Ausführungsbeispiel ausgebildet sind. Jedes Filterelement 12 ist einem mit einem Absperrorgan 42 getrennt und verschliessbaren Rückspülkanal 38 zugeordnet. Durch Öffnen und Schliessen des betreffenden Absperrorgans 42′ kann somit jedes Filterelement unabhängig von den anderen rückgespült werden.

Grundsätzlich ist es auch möglich, das in Fig. 4 gezeigte Filtergerät dahingehend abzuändern, dass alle Filterelemente zu einem gemeinsamen Rückspülkanal mit einem entsprechend grösseren Querschnitt führen, der mit Hilfe eines einzigen Absperrorgans verschliessbar ist. In einem solchen Fall werden beim Öffnen des Absperrorgans alle Filterelemente gemeinsam rückgespült.

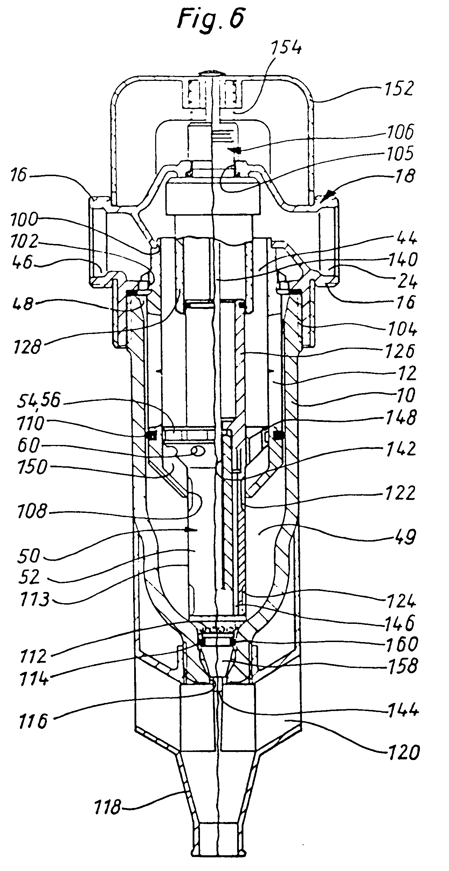

Bei den in Fig. 6 bis 9 gezeigten Ausführungsbeispielen eines Filtergeräts ist das Filterelement 12 ausschliesslich am Kopfteil 18 nach Art eines Bajonettverschlusses 102 befestigt und zusätzlich in einem zentrischen Durchbruch 100 des Kopfteils zentriert. Auch die Filtertasse 10 ist in eine zu den beiden Durchbrüchen zentrische Schrauböffnung 104 des Kopfteils 18 eingesetzt.

Weiter enthält das Kopfteil 18 eine an einem weiteren zentrischen Durchbruch 105 befestigte Steuereinrichtung 106 für die Auslösung der Verschiebebewegung des Kanalstücks 50.

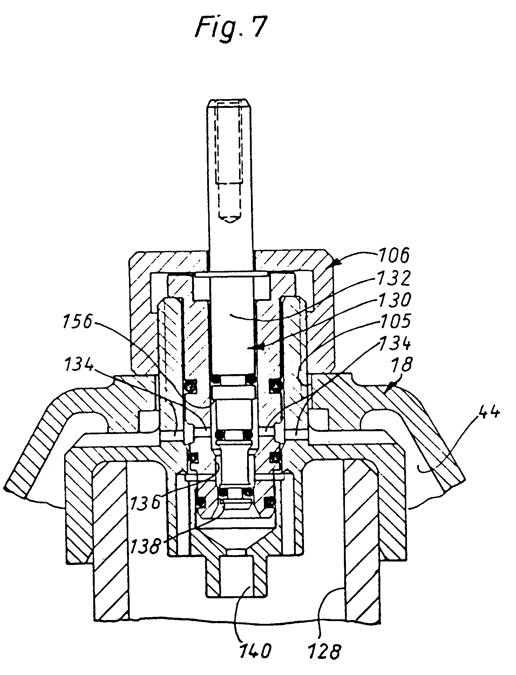

Bei dem Ausführungsbeispiel nach Fig. 6 und 7 greift das Kanalstück 50 mit seinem nach unten weisenden Rohr 52 durch eine zentrische Öffnung 108 des mit einem Dichtring 110 gegen die Innenfläche der Filtertasse 10 anliegenden Filterelements 12 hindurch und weist am unteren Rohrende einen in einen Dichtsitz 112 einführbaren Schliesskörper 114 auf. Die Rückspülkammer 49 wird durch den unteren Teil der Filtertasse 10 gebildet, die über die durch den Schliesskörper 114 verschliessbare Rückspülwasserauslassöffnung 116 zu einem von unten auf die Filtertasse 12 aufschraubbaren Abflussstutzen 118 führt. Der Abflussstutzen 118 ist über eine radiale Ringöffnung 120 mit Atmosphärendruck beaufschlagt, so dass ein ungewolltes Ansaugen von Schmutzwasser aus einem angeschlossenen Kanal in das Filtergerät unmöglich ist.

Das in die Rückspülkammer 49 eingreifende Rohr 52 des Kanalstücks weist in seinem oberen und unteren Teil Schlitzaussparungen 122, 124 auf, durch die sowohl in dem dargestellten Schliesszustand als auch bei vollständig nach oben verschobenem Kanalstück 50 grobe Schmutzpartikel aus der Rohwasserkammer 44 in die Rückspülkammer 49 und von dort zur Auslassöffnung 116 gelangen können. Im Zwischenbereich 113 zwischen den oberen und unteren Schlitzaussparungen 122, 124 wird das Rohr dicht in der zentrischen Öffnung 108 des Filterelements geführt.

In seinem oberen Bereich weist das Kanalstück 50 einen axial überstehenden Hohlkolben 126 auf, der in einen nach unten offenen Steuerzylinder 128 der hydraulischen Steuereinrichtung 106 eingreift.

Wie aus Fig. 7 zu ersehen ist, enthält die hydraulische Steuereinrichtung 106 ein Drei/Zwei-Wegeventil 130, das von aussen über einen Ventilstössel 132 betätigbar ist. In der dargestellten sogenannten Betriebsstellung des Ventils 130 steht der Steuerzylinder 128 über die Kanäle 134 mit der Rohwasserkammer 44 in Verbindung, so dass das Kanalstück 50 unter der Einwirkung des in der Rohwasserkammer 44 herrschenden Netzdrucks mit seinem Schliesskörper 114 im Dichtsitz 112, der sich in der Rückspülauslassöffnung befindet, gehalten wird.

Beim Verschieben des Ventilstössels 132 von der Betriebsstellung aus in seine nach unten verschobene sogenannte Rückspülstellung wird im Bereich des Ventilsitzes 136 der Durchtritt von der Rohwasserkammer 44 zum Steuerzylinder 128 versperrt und durch Öffnen im Bereich des Ventilsitzes 138 eine Verbindung zwischen dem Steuerzylinder 128 und einem zentral nach unten führenden Rohr 140 hergestellt. Das zentrale Rohr 140 ist dicht durch eine zentrale Axialbohrung 142 des Kanalstücks 50 hindurchgeführt und ist an seinem Ende 144 zum Abflussstutzen 118 hin offen. In der Rückspülstellung wird der Steuerzylinder 128 daher gegen Atmosphärendruck entlastet.

Wird somit das Steuerventil 130 von der Betriebsstellung in die Rückspülstellung umgesteuert, so wird das Kanalstück 50 aufgrund des sich zwischen der Rückspülkammer 49 und dem Steuerzylinder 128 einstellenden Differenzdrucks nach oben verschoben, wobei das Wasser aus dem Steuerzylinder 128 über das zentrale Rohr 140 verdrängt wird.

Dabei hebt sich der Schliesskörper 114 von seinem Dichtsitz 112 ab und gibt die Auslassöffnung 116 frei. In der ersten Rückspülphase wird zunächst der sich im unteren Teil der Rückspülkammer angesammelte Grobschmutz ausgespült. Beim weiteren Anheben des Kanalstücks 50 gelangen die Mantelaussparungen 122 aus dem Bereich der zentrischen Öffnung 108 heraus, so dass kein Druckausgleich zwischen der Rohwasserkammer 44 und der Rückspülkammer 49 mehr auftreten kann. In diesen Zwischenstellungen wird das Filterelement 12 an den augenblicklich von der Ringöffnung überstrichenen Stellen von aussen nach innen mit Reinwasser rückgespült, wobei das Rückspülwasser durch die Axialbohrungen 146 im Rohr 52 hindurch zum Abflussstutzen 118 gelangt. Beim Hochfahren des Kanalstücks 50 werden zugleich gröbere Schmutzteile durch den schräg nach oben weisenden, den Ringkanal 54 enthaltenden Abstreifer 148 von der glatten Filteroberfläche abgeschabt und gelangen durch die Öffnungen 60 hindurch in den darunter befindlichen Raum 150 des Filterelements 12. In der oberen Endstellung decken sich die unteren Mantelaussparungen 124 mit der zentrischen Öffnung 108, so dass die sich im Raum 150 angesammelten Schmutzteilchen mit dem sodann nach unten strömenden Rohwasser zur Auslassöffnung 116 gelangen können. Das Kanalstück 50 bewegt sich nur so lange bis zu einem oberen Anschlag aufwärts, als das mit dem Ventilstössel 132 verbundene Betätigungselement 152 niedergehalten wird.

Wird das Betätigungselement 152 losgelassen, so gelangt das Steuerventil 130 unter der Einwirkung der Rückholfeder 154 und des gegen die ringförmige Kolbenfläche 156 wirkenden Wasserdrucks aus der Rohwasserkammer 44 wieder in seine Betriebsstellung, in der der Steuerzylinder 128 mit dem Betriebsdruck aus der Rohwasserkammer 44 beaufschlagt wird. Die Kanäle 134 im Steuerventil 130 besitzen eine Drosselwirkung, die gewährleistet, dass kein schlagartiger Druckausgleich auftritt und sich das Kanalstück 50 wieder langsam in seine untere Endstellung bewegt. Hierbei wird die innere Filterfläche des Filterelements 12 ein zweites Mal überstrichen und vom Restschmutz gereinigt. Beim Schliessen der Auslassöffnung 116 tritt im Bereich des kegelförmigen Drosselkörpers 158 eine allmähliche Querschnittsverengung auf, die das Entstehen von Flüssigkeitsstössen während des Schliessvorgangs verhindert.

Der Schliesskörper 114 enthält als Dichtelement einen Nutring 160, der mit seiner nach oben offenen Nut dafür sorgt, dass die Dichtwirkung der Nutenflanken nach beiden Seiten durch den Flüssigkeitsdruck in der Rückspülkammer 49 unterstützt wird.

Bei dem in Fig. 6 gezeigten Ausführungsbeispiel wird der Ventilstössel über das Betätigungselement 152 manuell betätigt. Es ist jedoch ohne weiteres möglich, das Steuerventil automatisch, beispielsweise mit Hilfe eines Elektromagneten, zu betätigen.

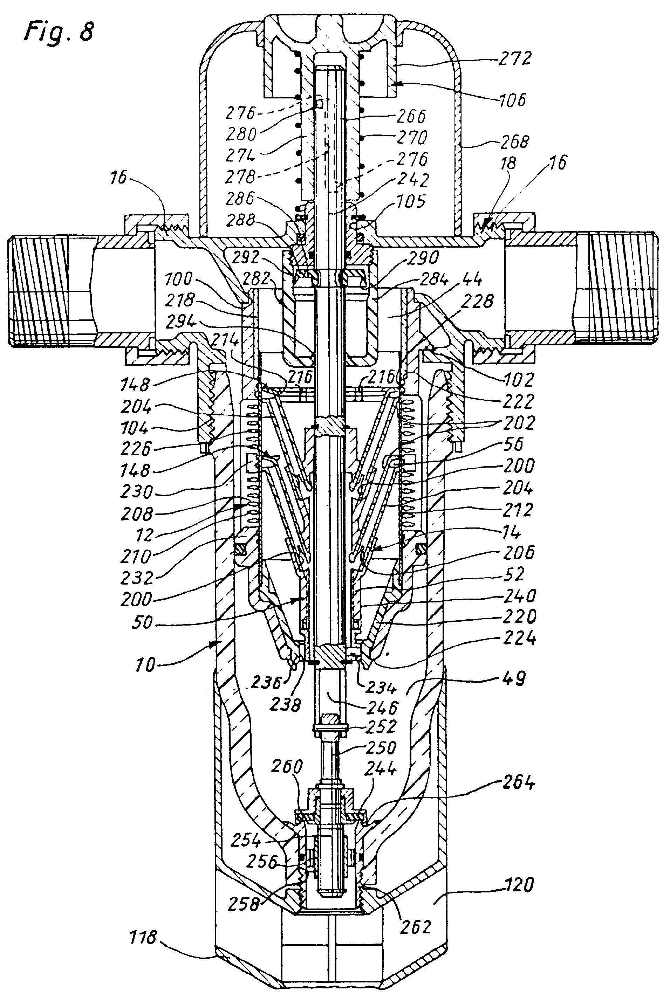

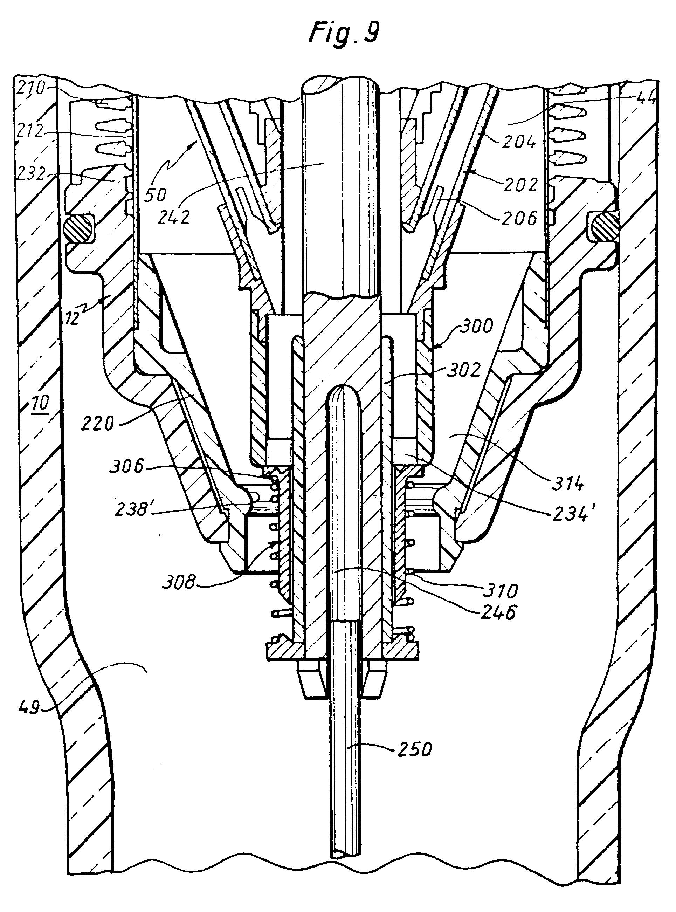

Bei dem bevorzugten Ausführungsbeispiel nach Fig. 8 und 9 weist das Zentralrohr 52 des Kanalstücks 50 je sechs auf zwei Ringen angeordnete Mantelöffnungen 200 auf, in die einzelne, sich zu je einem ringförmigen Abstreifer 148 ergänzende Abstreifelemente 202 mit ihren Rohransätzen 204 dichtend einrastbar sind. Die elastische Verformbarkeit der Rohransätze 204 wird durch die Längsschlitze 206 erleichtert. Die Abstreifelemente 202 liegen mit den Kanten ihrer schlitzförmigen Eintrittsöffnungen 56 unter elastischer Vorspannung gegen die glatte Innenfläche des innenseitig über den mit Durchtrittsöffnungen 208 versehenen Stützkörper 210 gespannten Filterstrumpfs 212 an. In die radial nach innen weisenden, sich zu einer Ringnut ergänzenden Nuten 214 der Abstreifelemente 202 kann ausserdem bei Bedarf noch ein nicht dargestellter Spreizring eingesetzt werden, der die Andrückkraft der Abstreifelemente 202 gegen den Filterstrumpf 212 erhöht. Die Abstreifelemente 202 eines jeden Abstreifers 148 weisen in Umfangsrichtung kleine Abstände 216 voneinander auf, die gewährleisten, dass die Abstreifelemente 202 in radialer Richtung elastisch ausweichen können, so dass Fertigungstoleranzen sowie Unebenheiten aufgrund von Ablagerungen auf dem Filterstrumpf 212 ausgeglichen werden.

Der als Gewebeschlauch ausgebildete Filterstrumpf 212 ist an seinen Enden mit angespritzten Rastringen 218, 220 versehen, die an entsprechenden stirnseitigen Rastflächen 222, 224 des Stützkörpers 210 unter Spannen des Filterstrumpfs 212 unlösbar eingerastet sind. Die als Anlage für den Filterstrumpf 212 dienende Stütsrippe 226 ist schraubenförmig ausgebildet, so dass die Abstreifer 148 über ihre gesamte axiale Verschiebestrekke mit annähernd gleichbleibendem Druck und damit gleichbleibender Gleitreibung gegen den Filterstrumpf 212 und den Stützkörper 210 anliegen, wodurch ein kontinuierlicher Bewegungsablauf gewährleistet ist. Auch in den durchtrittslosen Bereichen 228, 230, 232 des Stützkörpers 210, die zur Aufnahme der Abstreifer 148 in ihren Endlagen bestimmt sind, ist die schraubenförmige Stützrippe 226 fortgeseht, so dass auch dort keine Änderung im Gleitreibungswiderstand auftritt.

Am austrittsseitigen Ende des Kanalstücks 50 befinden sich mehrere in Umfangsrichtung einen Abstand voneinander aufweisende, radial nach aussen weisende Austrittsöffnungen 234, die in der in Fig. 8 gezeigten Schliessstellung des Kanalstücks 50 durch den am Filterelement 12 angeordneten Schliessring 236 gegen Rohwasserzutritt verschlossen sind. Im Bereich zwischen den Austrittsöffnungen 234 weist das Kanalstück 50 nach unten durchgehende Schlitzaussparungen 238 auf, durch die während des Filterbetriebs Grobschmutz von der Rohwasserkammer 44 in die Rückspülkammer 49 gelangen kann. Diese Schlitzöffnungen 238 werden während des Rückspülvorgangs beim Niederdrücken des Kanalstücks 50 durch die in den Schliessring 236 eindringende Zylinderfläche 240 verschlossen, während gleichzeitig die Austrittsöffnungen 234 zur Rückspülkammer 49 hin geöffnet werden.

Das Verschieben des Kanalstücks 50 erfolgt über eine nach oben über das Filtergehäuse überstehende Betätigungsstange 242, die mit dem Kanalstück 50 verschiebefest, aber drehbar verbunden ist. Am unteren Ende der Betätigungsstange 242 ist ausserdem ein Schliesskörper 244 mit einem in einen Hohlraum 246 der Betätigungsstange 242 eingreifenden Zapfen 250 axial verschiebbar gelagert und mit dieser durch einen Bolzen 252 drehfest verbunden. Der Schliesskörper 244 greift ferner mit einer Gewindespindel 254 in eine Gewindehülse 256 ein, die in einem drehfest in die Austrittsöffnung 258 der Filtertasse 10 eingesetzten, mit dem Dichtsitz 260 für den Schliesskörper 244 versehenen metallischen Rohrstück 262 angeordnet ist. Auf diese Weise werden die auf den Dichtsitz 260 übertragenen Schliesskräfte vollständig innerhalb des metallischen Rohrstücks 262 abgebaut und nicht auf die aus Kunststoff bestehende Filtertasse 10 übertragen. Das Öffnen und Schliessen des Schliesskörpers 244 erfolgt durch Drehen der Betätigungsstange 242 und ist somit unabhängig von der Verschiebebewegung der Betätigungsstange während des Rückspülvorgangs. Im geschlossenen Zustand wird die Schliesskraft des Schliesskörpers 244 durch den sich innerhalb des Filtergehäuses aufbauenden Netzdruck erhöht, während der Öffnungsvorgang durch das im Bereich der vom Schliesskörper 244 teilweise übergriffenen Umlenkrinne 264 nach oben gegen den Schliesskörper 244 umgelenkte austretende Rückspülwasser unterstützt wird.

Die Betätigungsstange 242 ist an ihrem nach oben aus dem Filtergehäuse herausgeführten Ende 266 mit einem in den Gehäuseansatz 268 gegen die Kraft der Druckfeder 270 versenkbaren Betätigungsknopf 272 versehen, über den die Betätigungsstange 242 sowohl zum Öffnen und Schliessen des Schliesskörpers 244 gedreht, als auch zum Verschieben des Kanalstücks 50 axial verschoben werden kann. Die Versenkbarkeit des Drehknopfs wird durch zwei im Schaft 274 des Betätigungsknopfes 272 angeordnete, mit einer oberen und einer unteren Rastaussparung 276 versehene Längsschlitze 278 ermöglicht, in die ein beidseitig über die Betätigungsstange radial überstehender Führungs- und Rastzapfen 280 eingreift.

Um während des Rückspülvorgangs eine gleichmässige langsame Verschiebebewegung des Kanalstücks 50 und der Abstreifer 148 zu gewährleisten, ist ferner ein Dämpfungsglied 282 vorgesehen, das aus einem innerhalb der Rohflüssigkeitskammer 44 starr angeordneten, von der Betätigungsstange 22 durchgriffenen Drosselzylinder 284 und einem innerhalb des Drosselzylinders 284 auf der Betätigungsstange 242 angeordneten, mit einer Drosselöffnung 286 versehenen Drosselkolben 288 besteht. Der Drosselzylinder 284 weist im oberen Bereich seiner Zylinderflächen eine Querschnittserweiterung 290 auf, so dass auf dem ersten Stück der Verschiebestrecke, auf dem zunächst die Haftreibung der gegen das Filterelement 12 andrückenden Abstreifer 148 überwunden werden muss, ein zusätzlicher Reibungswiderstand vermieden wird.

Der Drosselkolben 288 ist mit einer nach unten weisenden ringförmigen Dichtlippe 292 versehen, die beim Niederdrücken eine erhöhte Dämpfungswirkung gewährleistet. Weiter ist die im Drosselzylinder befindliche untere Durchtrittsöffnung für die Betätigungsstange 242 von einer Dichtlippe 294 begrenzt, die beim Niederdrücken der Betätigungsstange 242 einen Wasseraustausch mit der Rohflüssigkeitskammer 44 verhindert, nicht jedoch beim Zurückbewegen.

Bei dem Ausführungsbeispiel nach Fig. 9 ist die Austrittsöffnung des Kanalstücks 50 als axial nach unten weisende Ringöffnung 234' ausgebildet, die in einem doppelwandigen Rohransatz 300 des Kanalstücks 50 angeordnet ist. Auf dem nach unten überstehenden, auf die Betätigungsstange 242 aufgesteckten Innenrohr 302 des Rohransatzes 300 ist ein mit einem ringförmigen Verschlussorgan 306 versehener Verschlusskörper 308 axial verschiebbar gelagert.

Solange zwischen dem Inneren des Kanalstücks 50 und der Rückspülkammer 49 keine oder nur eine geringe Druckdifferenz besteht, wird das Verschlussorgan 306 unter der Einwirkung der Rückstellfeder 310 gegen die Berandungen der Austrittsöffnung 234' gedrückt. Dadurch wird verhindert, dass während des Filtrierbetriebs Rohwasser aus der Rohwasserkammer 44 oder der Rückspülkammer 49 durch die Austrittsöffnung 234' in das Innere des Kanalstücks 50 gelangen kann und sich dort Schmutzteilchen aus dem Rohwasser ablagern können. Andererseits steht die Rohwasserkammer 44 über die ringförmige Durchtrittsöffnung 238′ mit der Rückspülkammer 49 in Verbindung, so dass grobe Schmutzteilchen während des Filtrierbetriebs nach unten in die Rückspülkammer 49 hindurchfallen können. Wenn zu Beginn des Rückspülbetriebs zunächst der Schliesskörper 244 durch Drehen der Betätigungsstange 242 von seinem Dichtsitz 260 abgehoben wird, wird das Rohwasser aus der Rückspülkammer mit den dort angesammelten Grobschmutzteilchen durch das über die Durchtrittsöffnung 238′ nachströmende Rohwasser ausgespült. Solange die Durchtrittsöffnung 238′ offen ist, bleibt die Austrittsöffnung 234′ immer noch verschlossen. Wenn jedoch anschliessend beim Verschieben der Betätigungsstange 242 mit dem Kanalstück 50 das Aussenrohr 312 des Rohransatzes 300 in die Durchtrittsöffnung 238′ gelangt und diese gegen einen weiteren Durchtritt von Rohwasser aus der Rohwasserkammer 44 verschliesst, baut sich zwischen dem Inneren des Kanalstücks 50 und der Rückspülkammer 49 eine Druckdifferenz auf, die das Verschlussorgan 306 entgegen der Kraft der Rückstellfeder 310 von der Austrittsöffnung 234′ abhebt und den Austritt von Rückspülwasser mit vom Filterelement abgetragenem Feinschmutz aus dem Kanalstück 50 über die Rückspülkammer 49 zum Abflussstutzen 118 ermöglicht. In dieser Phase wird der durch die Abstreifelemente 202 von der Oberfläche des Filterstrumpfes 212 abgestreifte Grobschmutz in dem konischen Ringraum 314 des Filterelements 12 gesammelt, bis die Durchtrittsöffnung 238′ beim anschliessenden Anheben der Betätigungsstange 242 wieder freigegeben wird. Sofort nach der Freigabe der Durchtrittsöffnung 238′ gelangt das Verschlussorgan 306 unter der Einwirkung der Rückstellfeder 10 wieder nach oben in seine Schliessstellung. Dadurch kann der sich im Verlauf des Rückspülvorgangs im Filterelement 12 angesammelte Grobschmutz mit dem ausströmenden Rohwasser in die Rückspülkammer 49 gelangen und zum Abflussstutzen hin ausgespült werden, und zwar wiederum ohne dass Teile davon in das Kanalstück 50 eindringen können.

## Patentansprüche

1. Rückspülbares Filtergerät für unter Überdruck stehende Flüssigkeiten, insbesondere Wasser, mit einer mit einem Rohflüssigkeitseinlass (24) verbindbaren Rohflüssigkeitskammer (44), einer von dieser durch mindestens ein im wesentlichen hohlzylindrisches Filterelement (12) getrennten, mit einem Reinflüssigkeitsauslass (46) verbundenen Reinflüssigkeitskammer (48), einer mit einem verschliessbaren Rückspülkanal verbindbaren Rückspülkammer (49) und einem innerhalb des Filterelement (12) angeordneten, mit mindestens einer Eintrittsöffnung (56) über die rohflüssigkeitsseitige Oberfläche des Filterelements axial verschiebbaren, austrittsseitig mit der Rückspülkammer (49) verbindbaren Kanalstück (50), wobei die Eintrittsöffnung des Kanalstücks (50) als radial gegen die Innenfläche des Filterelements (12) weisende schlitzförmige Umfangsöffnung ausgebildet ist, die an mindestens einem mit den Begrenzungskanten der Eintrittsöffnung (56) gegen das Filterelement (12) dichtend anliegenden und beim Verschieben des Kanalstücks auf diesem axial gleitenden Abstreifer (148) angeordnet, ist dadurch gekennzeichnet, dass das Filterelement (12) einen glatt über die Innenfläche eines Stützkörpers (210) gespannten Filterstrumpf (212) aufweist, gegen dessen Innenfläche der Abstreifer unter elastischer Vorspannung unmittelbar anliegt, dass die Rohflüssigkeitskammer (44) in der Ausgangslage und/oder der Endlage des Kanalstücks (50) über mindestens eine beim Verschieben des Kanalstücks (50) selbsttätig verschliessbare Durchtrittsöffnung (66; 122, 124; 238) für Schmutzpartiekl mit der darunter befindlichen Rückspülkammer (49) verbunden ist, dass der Abstreifer (148) aus mehreren in Umfangsrichtung in kleinem Abstand (216) voneinander am Kanalstück (50) angeordneten Abstreifelementen (202) zusammengesetzt ist, deren voneinander getrennte, radial nach aussen weisende Eintrittsöffnungen (56) sich zu der Umfangsöffnung erganzen, und dass das Kanalstück (50) ein an seiner Unterseite mit der Austrittsöffnung (234) und an seiner Mantelfläche mit Mantelöffnungen (200) versehenes Zentralrohr (52) aufweist und dass die Abstreifelemente (202) mit schräg nach unten weisenden Rohransätzen (204) in die Mantelöffnungen (200) des Zentralrohrs (52) dichtend eingesteckt, vorzugsweise engerastet sind.

2. Filtergerät nach Anspruch 1, dadurch gekennzeichnet, dass der Stützkörper (210) eine schraubenförmig verlaufende Stützrippe (226) für den Filterstrumpf (212) aufweist.

3. Filtergerät nach Anspruch 2, dadurch gekennzeichnet, dass der Stützkörper (210) mindestens einen vom Filterstrumpf (212) überspannten durchtrittslosen axialen Bereich (228, 230, 232) zur Aufnahme des zugehörigen Abstreifers (148) in dessen Ausgangs- oder Endlage aufweist und dass die schraubenförmige Stützrippe (210) sich auch über den durchtrittslosen Bereich (228, 230, 232) erstreckt.

4. Filtergerät nach einem der Ansprüche 1 bis 3, dadurch gekennzeichnet, dass der Filterstrumpf (212) als Gewebeschlauch ausgebildet ist, dessen Enden mit starren, an stirnseitigen Rastflächen (222, 224) des Stützkörpers (210) unter Spannen des Gewebeschlauchs einrastbaren Ringstücken versehen sind.

5. Filtergerät nach einem der Ansprüche 1 bis 4, dadurch gekennzeichnet, dass das Kanalstück (50) mindestens eine zur Rückspülkammer führende Austrittsöffnung (234, 234′) aufweist, die in der Ausgangslage des Kanalstücks (50) gegen Wasserzutritt selbsttätig verschliessbar ist.

6. Filtergerät nach einem der Ansprüch 1 bis 5, dadurch gekennzeichnet, dass das Kanalstück (50) mindestens zwei in axialen Abstand voneinander angeordnete Abstreifer (148) aufweist, die über verschiedene Bereiche des Filterstrumpfs (212) axial verschiebbar sind.

7. Filtergerät nach einem der Ansprüche 1 bis 6, dadurch gekennzeichnet, dass im Bereich der einsteckseitigen Enden der Rohransätze (204) eine elastische Materialverformung ermöglichende Längsschlitze (206) angeordnet sind.

8. Filtergerät nach einem der Ansprüche 1 bis 7, dadurch gekennzeichnet, dass die Abstreifelemente (202) des Abstreifers (148) radial nach innen weisende, sich zu einer Ringnut ergänzende Nuten (214) zur Aufnahme eines die Abstreifelemente (202) radial nach aussen biegenden elastisch vorgespannten Spreizrings aufweisen.

9. Filtergerät nach einem der Ansprüche 1 bis 8, dadurch gekennzeichnet, dass das Kanalstück (50) als Kolben ausgebildet ist, dessen wirksame Kolbenfläche mit Hilfe einer innerhalb des Filtergeräts angeordneten, manuell oder automatisch betätigbaren hydraulischen Steuerungseinrichtung (106) wahlweise mit einem nach der einen oder der anderen axialen Verschieberichtung des Kolbens weisenden Differenzdruck beaufschlagbar und das Kanalstück (50) dadurch von einer Ausgangslage in eine Endlage oder umgekehrt verschiebbar ist.

10. Filtergerät nach einem der Ansprüche 1 bis 9, dadurch gekennzeichnet, dass das Kanalstück (50) oder eine mit diesem verbundene Betätigungsstange (242) an dem in die Rückspülkammer (49) eintauschenden Ende seine Schliesskörper (114; 244) trägt, der gegen einen Dichtsitz (112; 260) im Bereich des Rückspülkanals andrückbar ist.

11. Filtergerät nach Anspruch 10, dadurch gekennzeichnet, dass das Kanalstück verschiebefest und drehbar und der Schliesskörper (244) drehfest und verschiebbar auf der an ihrem einen Ende von Hand oder automatisch verschieb- und drehbaren Betätigungsstange (242) angeordnet sind und dass der Schliesskörper (244) mit einem Gewinde (Gewindespindel 254) in ein im Bereich des Dichtsitzes (260) am Filtergerät starr angeordnetes Gegengewinde (Gewindehülse 256) eingreift.

12. Filtergerät nach Anspruch 11, dadurch gekennzeichnet, dass das Kanalstück (50) innerhalb des Filterelements (12) drehfest axial geführt ist.

13. Filtergerät nach Anspruch 11 oder 12, dadurch gekennzeichnet, dass die Betätigungsstange (242) an ihrem einen Ende einen in ein Gehäuseteil (268) entgegen der Kraft einer Feder (270) versenkbaren Betätigungsknopf (272) aufweist.

14. Filtergerät nach einem der Ansprüche 11 bis 13, dadurch gekennzeichnet, dass am Kanalstück (50) oder an der Betätigungsstange (242) ein in axialer Bewegungsrichtung wirkendes Dämpfungsglied (74; 282) angeordnet ist.

15. Filtergerät nach Anspruch 14, dadurch gekennzeichnet, dass das Dämpfungsglied (74; 282) einen Drosselzylinder (70; 284) und einen in diesen eingreifenden, beim axialen Verschieben des Kanalstücks (50) relativ zum Drosselzylinder (70; 284) verschiebbaren, mit einer Drosselöffnung (286) versehen Drosselkolben (288) aufweist und dass das Innere des Drosselzylinders (70; 284) über eine Ventil- oder Drosselöffnung (294) mit einer der Flüssigkeitskammern (44) des Filtergeräts verbindbar ist.

16. Filtergerät nach Anspruch 15, dadurch gekennzeichnet, dass der Drosselkolben (288) im Bereich seiner Ausgangslage eine kurze, im wesentlichen dämpfungsfreie Verschiebestrecke (Querschnittserweiterung 290) aufweist.

17. Filtergerät nach einem der Ansprüche 15 oder 16, dadurch gekennzeichnet, dass der Drosselzylinder (284) in der Rohflüssigkeitskammer (44) angeordnet ist, und dass die Betätigungsstange durch eine als Lippendichtung (294) ausgebildete Durchtrittsöffnung des Drosselzylinders (284) hindurchgreift.

18. Filtergerät nach einem der Ansprüche 1 bis 17 dadurch gekennzeichnet, dass das Kanalstück (50) im Bereich seines in die Rückspülkammer (49) eingreifenden Teils einen von dem in der Rückspülkammer herrschenden Flüssigkeitsdruck beaufschlagbaren Kolben bildet.

19. Filtergerät nach einem der Ansprüche 10 bis 18, dadurch gekennzeichnet, dass der Dichtsitz (260) und eine das Gegengewinde bildende Gewindehülse (256) an einem gemeinsamen Rohrstück (262) aus Metall angeordnet sind, das in eine Austrittsöffnung (258) der aus Kunststoff bestehenden Filtertasse (10) dreh- und verschiebefest eingesetzt ist.

20. Filtergerät nach Anspruch 19, dadurch gekennzeichnet, dass der Schliesskörper (244) in seiner Schliessstellung unter Einwirkung des in der Filtertasse (10) herrschenden Flüssigkeitsdrucks gegen den Dichtsitz (260) gedrückt ist.

21. Filtergerät nach einem der Ansprüche 19 oder 20, dadurch gekennzeichnet, dass das Rohrstück (262) eine den Dichtsitz (260) konzentrisch umgebende, teilweise vom Schliesskörper (244) übergriffene Umlenkrinne (264) für die austretende Rückspülflüssigkeit aufweist.

22. Filtergerät nach einem der Ansprüche 1 bis 21, dadurch gekennzeichnet, dass die Auslassöffnung (116) der Rückspülkammer (49) in einen vorzugsweise trichterförmigen Ablaufstutzen (118) mündet, der über eine im wesentlichen radial nach aussen weisende Ringöffnung (120) mit Atmosphärendruck beaufschlagbar ist.

23. Filtergerät nach einem der Ansprüche 10 bis 22, dadurch gekennzeichnet, dass das Filterelement (12), die Betätigungsvorrichtung (128; 242) und eine das Filterelement (12) und das Kanalstück (50) übergreifende Filtertasse (10) an zueinander zentrischen Durchbrüchen (100, 102) oder Öffnungen eines den Rohflüssigkeitseinlass (24) und den Reinflüssigkeitsauslass (46) enthaltenden Kopfstücks (18) lösbar befestig sind.

24. Filtergerät nach einem der Ansprüche 1 bis 5 gekennzeichnet durch ein am Kanalstück (50) relativ zur Austrittsöffnung (234′) axial verschiebbar angeordnetes Verschlussorgan (306), das beim Verschliessen der Durchtrittsöffnung (238′) unter der Einwirkung der sich zwischen dem Inneren des Kanalstücks (50) und der Rückspülkammer (49) aufbauenden Druckdifferenz entgegen der Kraft einer Rückstellfeder (310) in seine die Austrittsöffnungen (234′) freigenbende Offenstellung verschiebar ist.

## Claims

1. A back-washing filter assembly for fluids under overpressure, especially water, comprising a chamber (44) for untreated fluid connectable to an inlet (24) for untreated fluid, a chamber (48) for purified fluid which is separated from the chamber for untreated fluid (44) by at least one essentially hollow cylindrical filter element (12) and is connected to an outlet (46) for purified fluid, a back-washing chamber (49) connectable to a sealable back-washing channel, and a channel section (50) which is disposed inside the filter element (12), is coaxially displaceable with at least one inlet port (56) over the surface of the filter element on the side facing the untreated fluid and is connectable on the exit side with the back-washing chamber (49), where the inlet port of the channel section (50) is constructed as a slot-shaped peripheral opening orientated radially towards the inner face of the filter element (12) and arranged on at least one wiper (148) abutting tightly with the delimiting edges of the inlet port (56) against the filter element (12) and sliding axially thereon when the channel section is displaced, characterised in that the filter element (12) exhibits a filter stocking (212) stretched taut across the inner surface of a support (210), with the wiper, elastically prestressed, abutting directly against the inner surface of said filter stocking, in that at the starting and/or end position of the channel section (50) the chamber (44) for untreated fluid is connected to the back-washing chamber (49) below it via at least one passage (66; 122, 124; 238) for dirt particles which is self-sealing when the channel section (50) is displaced, in that the wiper (148) is composed of several wiping elements (202) spaced at small intervals (216) in circumferential directin on the channel section (50), the inlet ports (56) of said wiper elements (202) being spaced apart, pointing radially outwards and complementing each other to form the peripheral opening, and in that the channel section (50) exhibits a central pipe (52) provided on its bottom surface with the outlet port (234) and on its circumferential surface with openings (200), and in that the wiper elements (202) are inserted tightly, preferably latching, with pipe sockets (204) pointing obliquely downwards, into the openings (200) in the central pipe (52).

2. The filter assembly as claimed in claim 1, characterised in that the support (210) exhibits a helical stiffening rib (226) for the filter stocking (212).

3. The filter assembly as claimed in claim 2, characterised in that the support (210) exhibits at least one axial region (228, 230, 232), spanned by the filter stocking (212) and containing no passages, for accomodating the associated wiper (148) in the latter's starting or end position, and in that the helical stiffening rib (210) also extends across the region (228, 230, 232) that contains no passages.

4. The filter assembly as claimed in any of claim 1 to 3, characterised in that the filter stocking (212) is constructed as a fabric hose whose ends are provided with rigid annular members which locate on locking faces (222, 224) on the end surface of the support (210), thereby stretching the fabric hose taut.

5. The filter assembly as claimed in any of claim 1 to 4, characterised in that the channel section (50) exhibits at least one outlet port (234, 234′) leading to the back-washing chamber and self-sealing in the starting position of the channel section (50) against entry of water.

6. The filter assembly as claimed in any of claim 1 to 5, characterised in that the channel section (50) exhibits at least two axially spaced wipers (148) which are axially displaceable across various regions of the filter stocking (212).

7. The filter assembly as claimed in any of claim 1 to 6, characterised in that the region of the ends of the pipe sockets (204) on the insert side are disposed longitudinal slots (206) which permit elastic material deformation.

8. The filter assembly as claimed in any of claim 1 to 7, characterised in that the wipper elements (202) of the wiper (148) exhibit radially onward pointing grooves (214) which complement each other to form an annular groove to accomodate an elastically prestressed expanding ring which bends the wiper elements (202) radially outwards.

9. The filter assembly as claimed in any of claim 1 to 8, characterised in that the channel section (50) is constructed as a piston whose effective piston surface can be subjected as required, using a manually or automatically actuable hydraulic control device (106) arranged inside the filter assembly, to a differential pressure in one or the other direction of axial displacement of the piston, thereby making the channel section (50) displaceable from a starting position to an end position or vice versa.

10. The filter assembly as claimed in any of claims 1 to 9, characterised in that the channel section (50) or an actuating rod (242) connected thereto carries a closing member (114; 244) at the end immersed in the back-washing chamber (49) where said closing member can be pressed against a sealing fit (112; 260) in the region of the back-washing channel.

11. The filter assembly as claimed in claim 10, characterised in that the channel section is disposed, locked against displacement and rotatable, on the actuating rod (242) one end of which can be manually or automatically displaced and rotated, and the closing member (244) is disposed thereon, locked against rotation and displaceable, and in that the closing member (244) is lead-screw (254) actuated and engages in an antagonistic thread (threaded sleeve 256) rigidly disposed on the filter assembly in the region of the sealing fit (260).

12. The filter assembly as claimed in claim 11, characterised in that the channel section (50) passes, locked against rotation, axially inside the filter element (12).

13. The filter assembly as claimed in claim 11 or 12, characterised in that at one of its ends the actuating rod (242) exhibits an operating button (272) which can be recessed into a casing section (268) against the force a spring (270).

14. The filter assembly as claimed in any of claims 11 to 13, characterised in that a damping member (74; 282) operating in the axial direction of motion is arranged on the channel section (50) or on the actuating rod (242).

15. The filter assembly as claimed in claim 14, characterised in that the damping member (74; 282) exhibits a regulating cylinder (70; 284) and a regulating piston (288) which engages therein and can be displaced when the channel section (50) is displaced relative to the regulating cylinder (70; 284), and which is provided with a regulating port (286), and in that the interior of the regulating cylinder (70; 284) can be connected via a valve or regulating port (294) to one of the fluid chambers (44) of the filter assembly.

16. The filter assembly as claimed in claim 15, characterised in that the region of its starting position the regulating piston (288) exhibits a short, essentially undamped displacement path (cross-sectional extension 290).

17. The filter assembly as claimed in either claim 15 or 16, characterised in that the regulating cylinder (284) is disposed in the untreated fluid chamber (44), and in that the actuating rod engages through a passage in the regulating cylinder (284) which is constructed as a lip seal (294).

18. The filter assembly as claimed in any of claims 1 to 17, characterised in that in the region of the part that engages in the back-washing chamber (49) the channel section (50) forms a piston of the fluid in the back-washing chamber (49).

19. The filter assembly as claimed in any of claims 10 to 18, characterised in that the sealing fit (260) and a threaded sleeve (256) forming the antagonistic thread are arranged on a common pipe section (262) made of metal, which is inserted in an outlet port (258) on the plastic filter cup (10) so as to be locked against rotation and displacement.

20. The filter assembly as claimed in claim 19, characterised in that in its closure position the closing member (244) is pressed against the sealing fit (260) under the action of the pressure of fluid in the filter cup (10).

21. The filter assembly as claimed in either claim 19 to 20, characterised in that the pipe section (262) exhibits a diverting conduit (264) for the emerging back-wash fluid which concentrically encloses the sealing fit (260) and is partly overlapped by the closing member (244).

22. The filter assembly as claimed in any of claims 1 to 21, characterised in that the outlet port (116) of the back-washing chamber (49) terminates in a preferably funnel-shaped run-off connection (118), which can be subjected to atmospheric pressure via an essential radially outward pointing annular orifice (120).

23. The filter assembly as claimed in any of claims 10 to 22, characterised in that the filter element (12), the actuating mechanism (128; 242) and a filter cup (10) which overlaps the filter element (12) and the channel section (50) are detachably fixed to mutually concentric through holes (100, 102) or openings in a head end (18) containing the inlet (24) for untreated fluid and the outlet (46) for purified fluid.

24. The filter assembly as claimed in any of claims 1 to 5, characterised by a closure device (306) disposed on the channel section (50) and axially displaceable relative to the outlet port (234') which when the passage (238') is sealed off can be displaced against the force of a return spring (310) into its open position to uncover the outlet port (234') under the action of the pressure differential which builds up between the interior of the channel sectin (50) and the back-washing chamber (49).

## EP 0 120 988 B2

**Revendications**

1. Filtre avec lavage à contre-courant pour des liquides soumis à une pression effective, eaux notamment, avec un compartiment des eaux brutes (44) raccordable à une arrivée des eaux brutes (24), un compartiment des eaux propres (48) séparé du compartiment précité par un élément filtrant au moins (12), essentiellement en forme de cylindre creux, et relié à une sortie des eaux propres (46), un compartiment de rétrolavage (49) raccordable à un conduit de lavage à contre-courant, doté d'une possibilité de fermeture, et une section de conduit (50), montée à l'intérieur de l'élément filtrant (12), dotée d'une possibilité de déplacement axial avec une ouverture d'admission (56), au moins, sur la surface côté eaux brutes de l'élément filtrant, et raccordable côté sortie au compartiment de rétrolavage (49), l'ouverture d'admission de la section de conduit (50) étant représentée par une ouverture périphérique en forme de fente, orientée radialement par rapport à la surface interne de l'élément filtrant (12), et montée sur un racleur (148) au moins, qui s'applique hermétiquement avec les bords limites de l'ouverture (56) contre l'élément filtrant (12), sur lequel il glisse axialement avec le déplacement de la section de conduit, caractérisé en ce que l'élément filtrant (12) présente un manchon (212), tendu uniformément sur la partie interne d'un corps d'appui (210), et contre la surface interne duquel le racleur s'applique directement, sous une tension initiale élastique, en ce que le compartiment des eaux brutes (44) est relié au compartiment de rétrolavage sous-jacent (49), dans la position initiale et/ou finale de la section de conduit (50), par une ouverture de passage au moins (66; 122, 124; 238) pour les particules d'impuretés, dotée d'une possibilité de fermeture automatique avec le déplacement de la section (50), en ce que le racleur (148) se compose de plusieurs éléments de raclage (202), disposés dans le sens périphérique sur la section de conduit (50), avec un faible écartement mutuel (216), et dont les ouvertures d'admission (56), séparées les unes des autres et dotées d'une orientation radiale externe, constituent une ouverture périphérique, et en ce que la section de conduit (50) présente un tube central (52), doté d'un orifice de sortie (234) sur son côté inférieur et d'ouvertures latérales (200) sur sa surface latérale, et en ce que les éléments de raclage (202) sont hermétiquement enfoncés, de préférence encastrés, dans les ouvertures latérales (200) du tube central (52), par leurs éléments tubulaires (204) orientés à l'oblique vers le bas.

2. Filtre suivant la revendication 1, caractérisé en ce que le corps d'appui (210) présente une nervure hélicoïdale (226) pour le manchon fitrant (212).

3. Filtre suivant la revendication 2, caractérisé en ce que le corps d'appui (210) présente au moins une zone axiale pleine (228, 230, 232), recouverte par le manchon filtrant (212) et prévue pour recevoir le racleur correspondant (148) dans sa position initiale ou finale, et en ce que la nervure d'appui hélicoïdale (210) se prolonge également sur la zone pleine (228, 230, 232).

4. Filtre suivant l'une quelconque des revendications 1 à 3, caractérisé en ce que le manchon filtrant (212) est représenté par une gaine de tissu, dont les extrémités sont munies de bagues inamovibles, encastrables sur des surfaces d'arrêt frontales (222, 224) du corps d'appui (210) pour tendre la gaine de tissu.

5. Filtre suivant l'une quelconque des revendications 1 à 4, caractérisé en ce que la section de conduit (50) présentée au moins un orifice de sortie (234, 234'), relié au compartiment de rétrolavage et doté d'une possibilité de fermeture automatique à l'arrivée d'eau, dans la position initiale de la section de conduit (50).

6. Filtre suivant l'une quelconque des revendications 1 à 5, caractérisé en ce que la section de conduit (50) présente au moins deux racleurs (148), séparés par une certaine distance axiale et pouvant se déplacer axialement sur différentes zones du manchon filtrant (212).

7. Filtre suivant l'une des revendications 1 à 6, caractérisé en ce que des fentes longitudinales (206), disposées dans la zone des extrémités enfoncées des éléments tubulaires (204), autorisent une déformation élastique du matériau.

8. Filtre suivant l'une quelconque des revendications 1 à 7, caractérisé en ce que les éléments de raclage (202) du racleur (148) présentent des rainures (214), dotées d'une orientation radiale interne, formant une rainure annulaire et prévues pour recevoir un anneau d'écartement soumis à une tension initiale élastique, qui assure une flexion radiale externe des éléments de raclage (202).

9. Filtre suivant l'une quelconque des revendications 1 à 8, caractérisé en ce que la section de conduit (50) est représentée par un piston, dont la surface active est soumise à une pression différentielle, qui s'exerce dans l'un des deux sens de déplacement axial du piston, au moyen d'un dispositif de commande hydraulique (106), manuel ou automatique, monté à l'intérieur du filtre, la section de conduit (50) étant ainsi déplacée d'une position initiale dans une position finale, ou inversement.

10. Filtre suivant l'une quelconque des revendications 1 à 9, caractérisé en ce que la section de conduit (50) ou une tige de commande (242), reliée à cette dernière, supporte un corps de fermeture (114; 244) sur l'extrémité qui pénètre dans le compartiment de rétrolavage (49), ce corps pouvant s'appliquer contre un siège (112; 260), prévu dans la zone du conduit de rétrolavage.

11. Filtre suivant la revendication 10, caractérisé en ce que la section de conduit et le corps de fermeture

**12**

(244) sont montés sur la tige de commande (242), dotée d'une possibilité de déplacement et de rotation, manuelle ou automatique, sur l'une de ses extrémités, la section précitée pouvant tourner sans se déplacer et le corps pouvant se déplacer sans pouvoir tourner, et en ce que le corps de fermeture (244) s'engage par un filetage (broche filetée 254) dans un contre-filetage (douille taraudée 256), fixé sur le filtre dans la zone du siège (260).

12. Filtre suivant la revendications 11, caractérisé en ce que la section de conduit (50) est guidée axialement à l'intérieur de l'élément filtrant (12), sans possibilité de rotation.

13. Filtre suivant l'une des revendications 11 et 12, caractérisé en ce que la tige de commande (242) présente sur l'une de ses extrémités un bouton de comande (272), abaissable dans une section de corps (268) contre la force d'une ressort (270).

14. Filtre suivant l'une quelconque des revendications 11 à 13, caractérisé en ce qu'un organe d'amortissement (74; 282), dont l'effet d'exerce dans le sens de déplacement axial, est monté sur la section de conduit (50) ou sur la tige de commande (242).

15. Filtre suivant la revendication 14, caractérisé en ce que l'organe d'amortissement (74; 282) présente un cylindre d'étranglement (70; 284) et un piston d'étranglement (288) qui s'engage dans ce dernier, par rapport auquel il se déplace avec le mouvement axial de la section de conduit (50), et qui est muni d'un orifice d'étranglement (286), et en ce que l'intérieur du cylindre d'étranglement (70; 284) peut être relié à l'un des compartiments d'eau (44) du filtre par une ouverture de soupape ou d'étranglement (294).

16. Filtre suivant la revendication 15, caractérisé en ce que le piston d'étranglement (288) présente un parcours réduit, essentiellement sans amortissement (élargissement de section 290) dans la zone de sa position initiale.

17. Filtre suivant l'une quelconque des revendications 15 et 16, caractérisé en ce que le cylindre d'étranglement (284) est monté dans le compartiment des eaux brutes (44), et en ce que la tige de commande traverse une ouverture de passage du cylindre d'étranglement (284), représentée par un joint à lèvres (294).

18. Filtre suivant l'une quelconque des revendications 1 à 17, caractérisé en ce que la section de conduit (50) constitue un piston, soumis à la pression hydrostatique du compartiment de rétrolavage (49), dans la zone de sa section qui s'engage dans ce dernier.

19. Filtre suivant l'une quelconque des revendications 10 à 18, caractérisé en ce que le siège (260) et une douille taraudée (256), constituant le contre-filetage, sont montés sur un élément tubulaire commun (262) en métal qui est logé, sans possibilité de rotation et de déplacement, dans un orifice de sortie (258) du cadre de filtre (10) en plastique.

20. Filtre suivant la revendication 19, caractérisé en ce que le corps de fermeture (244) s'applique contre le siège (260) dans sa position de fermeture, sous l'effet de la pression hydrostatique qui règne dans le cadre de filtre (10).

21. Filtre suivant l'une quelconque des revendications 19 à 20, caractérisé en ce que l'élément tubulaire (262) présente un conduit de dérivation (264) pour les eaux de rétrolavage, périphérique et concentrique au siège (260) et partiellement recouvert par le corps de fermeture (244).

22. Filtre suivant l'une quelconque des revendications 1 à 21, caractérisé en ce que l'orifice de sortie (116) du compartiment de rétrolavage (49) débouche dans une tubulure d'évacuation (118), en forme d'entonnoir de préférence et soumise à la pression atmosphérique par l'intermédiaire d'une ouverture annulaire (120), dotée d'une orientation essentiellement radiale externe.

23. Filtre suivant l'une quelconque des revendications 10 à 22, caractérisé par une fixation amovible de l'élément filtrant (12), du dispositif de commande (128; 242) et d'un cadre de filtre (10), qui recouvre l'élément filtrant (12) et la section de conduit (50), sur des ouvertures concentriques (100, 102) ou orifices d'une pièce de tête (18), comportant l'arrivée des eaux brutes (24) et la sortie des eaux propres (46).

24. Filtre suivant l'une quelconque des revendications 1 à 5, caractérisé par un organe de verrouillage (306), monté sur la section de conduit (50) avec une possibilité de déplacement axial par rapport à l'orifice de sortie (234′), cet organe se déplaçant dans sa positon d'ouverture, qui libère l'orifice de sortie (234′), avec la fermeture de l'ouverture de passage (238′), sous l'effet de la différence de pression établie entre l'intérieur de la section de conduit (50) et le compartiment de rétrolavage (49) et contre la force d'un ressort de rappel (310).

EP 0 120 988 B2

## Fig. 1

14

# Fig. 2

## Fig. 3

Fig. 4

Fig. 5

Fig. 6

Fig. 7

**Fig. 8**

Fig. 9